# EUROPEAN PATENT SPECIFICATION

(11) **EP 1 505 567 B1**
(45) Date of publication and mention of the grant of the patent: **14.03.2007**
(21) Application number: 04254722.4
(22) Date of filing: 05.08.2004
(51) Int. Cl.: G09G 3/34, H04N 5/66, H04N 5/58, G02F 1/13357

(54) **Method for automatic backlight adjustment**
Verfahren zur automatischen Hintergrundlichteinstellung
Méthode pour la rétroéclairage réglable automatique

(30) Priority: 05.08.2003 GB 0318355
(43) Date of publication of application: 09.02.2005
(60) Divisional application: 07101520.0
(73) Proprietor: Research In Motion Limited, Waterloo, Ontario N2L 3W8 (CA)
(72) Inventor: Lowles, Robert J., Waterloo, Ontario N2T 2J5 (CA)
(74) Representative: Hibbert, Juliet Jane Grace

(56) References cited:
- EP-A- 0 979 003
- EP-A- 1 111 578
- CA-A- 2 463 697
- US-A1- 2002 130 830
- US-A1- 2002 163 524

## Description

### FIELD OF THE INVENTION

The present invention relates generally to devices having a backlight display. More particularly, the present invention relates to automatic backlight adjustment of a display.

### BACKGROUND OF THE INVENTION

Many electronic devices have displays for presenting information to a user. For example, modern cameras, MP3 players, compact disc players, Personal Digital Assistants (PDA's), cell phones and other portable communications devices have digital displays for displaying a variety of information to the user. Hybrid electronic devices are emerging as an all in one solution to reduce the number of components a user carries, making displays a more important component of the user interface. Such devices include PDA's with an integrated MP3 player and camera, or cell phones having an integrated PDA, camera and MP3 player. Regardless of the type of electronic device, displays are necessary for conveying information to the user and for permitting the user to interact efficiently with the electronic device.

A common feature available on electronic device displays is a backlight that illuminates the display to facilitate viewing in poor lighting conditions. These backlights are manually controlled by the user, and can be switched to different intensity levels depending upon the current ambient light condition.

Unfortunately, backlighting consumes power and users frequently forget to turn off the backlight when it is not needed, or fail to re-adjust the backlighting level to suit the ambient light conditions. For example, the user may not be aware that the backlight is turned on in bright lighting conditions. Since portable electronic devices have finite battery life, inefficient control of the backlighting level will unnecessarily drain the battery and reduce the duration of time the portable electronic device can be used. US2002/0163524 A1 refers to a method of automatically monitoring light conditions with a light meter, CA2463697 A1 utilises two photo detectors, one on the user's side and one on the back of the device and US2002/0130830 A1 monitors image data to generate a luminance signal. EP0797003 discloses Image-pickup and display apparatus and EP1111578 discloses an Image display device and image display method.

### SUMMARY OF THE INVENTION

According to an aspect of the invention, a method for automatically adjusting an intensity level of a backlight for a display of a device having a built-in camera comprises the steps of capturing an image with the camera and calculating an average pixel intensity of the captured image, and adjusting the intensity level of the backlight in accordance with the calculated average pixel intensity of the captured image.

In accordance with another aspect of the invention, a device having a camera and an adjustable backlight for a display, comprises a camera controller for instructing the camera to capture an image and for receiving the captured image from the camera, a central processor for receiving the captured image, calculating the average pixel intensity of the captured image and providing a backlight control level in accordance with the calculated average pixel intensity of the captured image, and a display controller for receiving the backlight control level and for setting the backlight of the display to an intensity in accordance with the backlight control level.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 is an illustration of an integrated portable electronic device;
Figure 2 is a block diagram of control circuits of the integrated portable device shown in Figure 1;
Figure 3 is a flow chart showing a method of automatically adjusting a backlight intensity level according to an embodiment of the present invention;
Figures 4 and 5 form a flow chart showing a method of automatically adjusting backlight intensity level according to another embodiment of the present invention; and,
Figure 6 is a graphical illustration of backlight brightness levels.

### DETAILED DESCRIPTION

A method and system for automatically adjusting a backlight intensity level for displays is disclosed. The system and method are implemented in electronic devices having a camera and digital backlit displays, such that the camera is used to determine an ambient light level and the backlight level is adjusted according to the determined ambient light level. In particular, when the camera is not in use for capturing images by the user, the automatic backlight adjustment system captures a first image with the camera to determine an initial ambient light level, and then captures a second image with the camera at a later time to determine a subsequent ambient light level. The subsequent and initial ambient light levels are compared to each other and the backlight intensity level is either increased or decreased a predetermined amount for optimal viewing and low power consumption. Backlight intensity determination can be performed on the basis of a single image instead of a differential between two images.

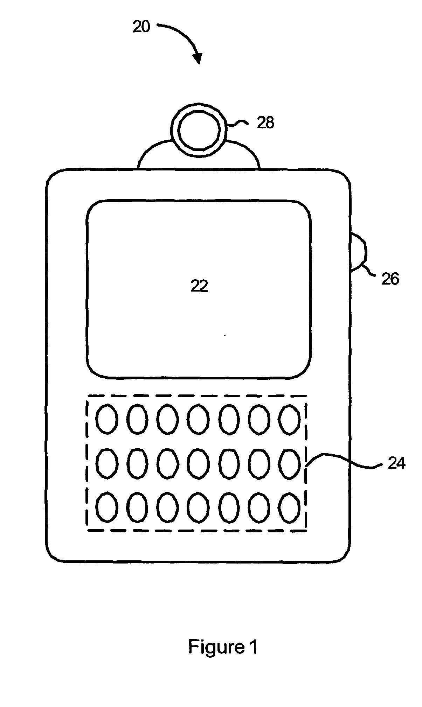

Figure 1 is a drawing of an integrated portable electronic device 20 incorporating the method and system of automatic backlight adjustment according to an embodiment of the present invention. Device 20 includes a display 22, keyboard or button area 24, a thumbwheel 26 and a camera 28. Keyboard 24 and thumbwheel 26 are user input interfaces, display 22 provides information to the user in the form of text and/or images, and camera 28 captures images. Camera 28 can include CCD or CMOS based cameras for example. Those of skill in the art will understand that the aforementioned components of device 20 are representative of other well known common electronic components that device 20 can include. For example, device 20 can further include an MP3 player and wireless communication capability. Display 22 can be any conventional monochrome or colour type of display, having a backlight (not shown) to illuminate the text and/or images displayed on display 22. Furthermore, the keyboard can be illuminated by the backlight or a separately controlled backlight by a corresponding keyboard backlight controller. The backlight is typically provided by light emitting elements, such as light emitting diodes (LED's) for example, however any suitable light emitting element can be used.

According to an embodiment of the present invention, camera 28 is controlled by a central processor of device 20 to capture images while camera 28 is not in normal use. The calculated ambient light level of each captured image is compared to the ambient light level of a previously captured image, and the central processor sets the backlight intensity of display 22 to an appropriate level that provides sufficient illumination of display 22 while the display is active. Therefore, the backlight intensity level is automatically adjusted according to the ambient light condition, and manual adjustment of the backlight intensity level by the user is no longer required. It is noted however that electronic devices can optionally include a manual override switch or button to permit the user to manually adjust the backlight intensity level. Backlight power consumption is thus minimized since it is automatically set to an intensity level just sufficient for optimal viewing by the user. Component cost of device 20 is also reduced because a dedicated light sensor is not required as camera 28 is used to sense the ambient light level.

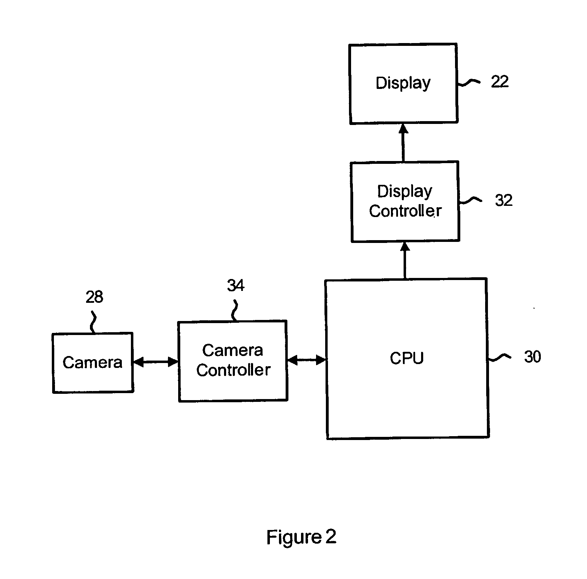

Figure 2 is a block diagram showing functional blocks of device 20 that are responsible for controlling display 22 and camera 28 under normal operating conditions. Some functional blocks are not shown to simplify the schematic, although those of skill in the art would understand that these are required for proper operation of device 20. Device 20 includes a central processor (CPU) 30, a display controller 32, and a camera controller 34. Display block 22 and camera block 28 represent the same numbered elements in Figure 1.

CPU 30 can be implemented as an application specific integrated circuit (ASIC) having the necessary functional circuits to drive the functions of device 20, with display controller 32 and camera controller 34 integrated upon the same chip.

Display controller 32 is an interface between CPU 30 and display 22, which receives commands from CPU 30, including a backlight control level signal, and drives display 22 with the appropriate text or image. Those of skill in the art will understand that the backlight control level can be an n-bit signal for activating and controlling the backlight intensity level for the display 22

Camera controller 34 is an interface between CPU 30 and camera 28, which receives commands from CPU 30 and drives camera 28 to capture images. Captured image data is clocked out to camera controller 34 from camera 28, under the control of camera controller 34, which is then provided to CPU 30. As should be known to those of skill in the art, the camera controller provides an appropriate timing signal for the camera, configures the camera and can optionally include memory to store a captured image. The image size is defined by CPU 30 by configuring the camera controller 34 in accordance with the resolution of the camera. A smaller image size can be set for camera controller 34 since a full sized image is not required to determine the ambient light. According to an embodiment of the present invention, the average pixel intensity of the captured image can be calculated by CPU 30. Alternatively, many CCD chips have a binning mode of operation in which the charges of multiple pixels are added to a single pixel. Therefore the total charge of the single binned CCD pixel can be used to represent the average pixel intensity of the ambient light. The binning operation is executed in the CCD, and the single binned pixel is then provided by camera controller 34 to CPU 30 for subsequent backlight adjustment of display 22. Any number of binned pixels can be used to represent the average pixel intensity of the captured image, where the number of pixels to be binned together depends upon the particular CCD being used. If required, CPU 30 can provide the image data to display controller 32 for viewing on display 22. It should be noted that the block diagram of Figure 2 illustrates the display controller 32 and camera controller 34 as separate components, but those of skill in the art will understand that these functional circuits are preferably integrated in a single IC or within the CPU 30 such that the image data can be transferred directly to the display controller 32 from camera controller 34.

The CPU 30 can control display 22 in response to image data received from camera 28 during a camera mode of operation of device 20. Therefore, CPU 30 can be further programmed to control the backlight intensity level of display 22 in response to image data received by camera 28 through a corresponding backlight control level. No additional components are required in device 20 to implement the automatic backlight adjustment embodiments of the present invention.

In use, the electronic device is either on or in standby. While in the standby state, the device is preferably in a low power consumption mode where the display is not in use and is preferably turned off to conserve power, and the CPU operates in a standby mode to further conserve power. While in the on state the CPU becomes fully active and the display is turned on to present information to the user. In both the on and standby states, the electronic device can use the camera to sample the ambient light level for adjusting the backlight intensity of the display. It is noted however, that the camera samples the ambient light for adjusting backlight intensity when the camera is not in use for its primary purpose of capturing images.

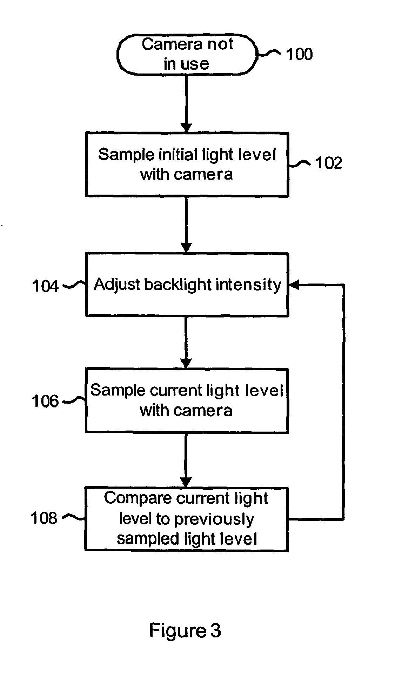

Figure 3 is a flow chart illustrating a general method for automatically adjusting the backlight intensity level of displays using a built in camera of an electronic device according to an embodiment of the present invention. In the present embodiment, images are iteratively captured by the camera, with an average pixel intensity of each image being calculated in each iteration. The average pixel intensity of a currently captured image is compared to that of the previously captured image, and the intensity level of the backlight is adjusted according to the difference between the two average pixel intensities in each iteration.

The method begins in step 100 when it is determined that the camera is not in use. Proceeding to step 102, the device samples an initial ambient light level with the camera by capturing an image. The backlight intensity is then adjusted to a level corresponding to the sampled light level in step 104. This intensity level can be one of a predetermined number of coarse intensity levels, according to an embodiment of the present invention. The process proceeds to step 106 where a current ambient light level is sampled with the camera after a predetermined delay period. The previously sampled ambient light level and the currently sampled ambient light level are compared to each other in step 108. The process loops back to step 104 to adjust the backlight intensity level corresponding to the difference between the current and previously sampled light levels. In a preferred embodiment, the backlight intensity level is increased or decreased by one or more predetermined fine intensity levels that correspond to the difference between the current and previously sampled light levels. Moreover, the backlight intensity level is unchanged if there is substantially no difference between the current and previously sampled ambient light levels. In summary, an image is captured at predetermined intervals and the average pixel intensity of the currently captured image is compared to the average pixel intensity of the previously captured image. Then the backlight intensity level is adjusted in accordance with the difference between the average pixel intensities. More specifically, the backlight level can be set, increased or decreased via the backlight control level.

Therefore, the camera can be used to automatically adjust the backlight intensity of the display to ease its viewability by the user. While the aforementioned method automatically adjusts the backlight intensity level of an electronic device display while the camera is not in normal use, the ambient light can be calculated after a normal image is captured, according to an alternate embodiment of the present invention. In particular, once a picture image is captured, a pixel intensity calculation of the image can be performed to obtain the ambient light level at the instance the image was captured. Then the backlight level can be adjusted accordingly and the device can return to executing the method shown in Figure 3. Thus the calculated pixel intensity of the picture image can replace a regularly scheduled or subsequent image sampling step.

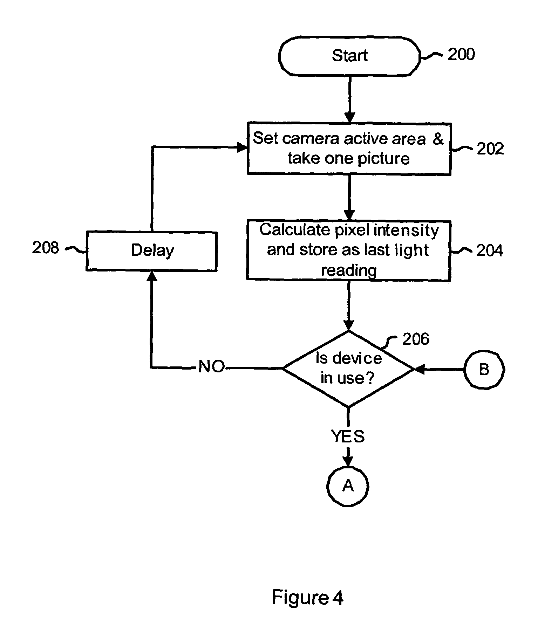

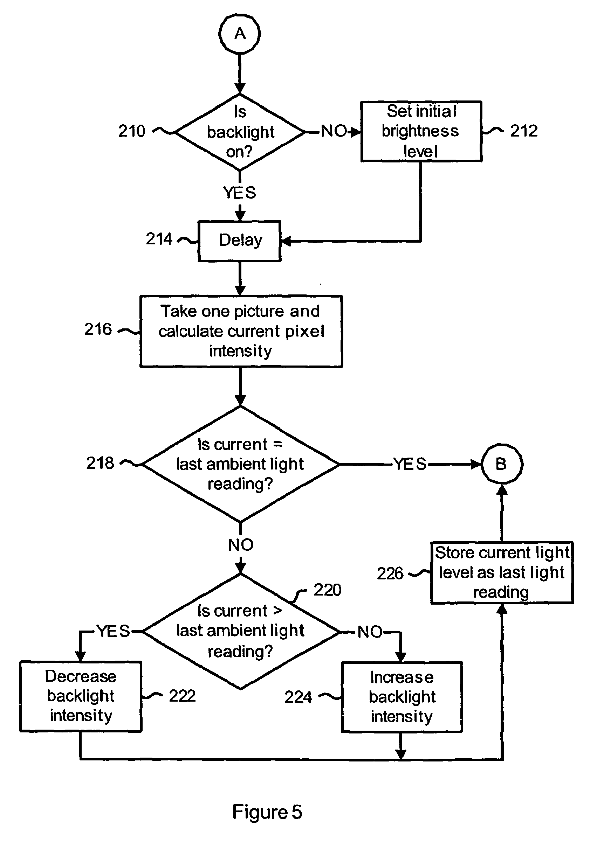

Figures 4 and 5 show a specific method of automatically adjusting backlight intensity of a display using a built in camera of an electronic device according to another embodiment of the present invention.

The process begins at step 200 where it is determined that the camera is not in use. In step 202, a 10 x 10 camera pixel active area is set and an image is captured by the camera. In the present example, a 10 x 10 camera pixel active area is preferred for determining the ambient light level because it provides an adequate representation of the ambient light level while minimizing the time required for capturing an image. Hence more power can be saved since less camera pixels are active. Those of skill in the art will understand that any camera pixel active area size can be used to sample the ambient light level. The average pixel intensity of the 10 x 10 captured image is calculated in step 204 in a CPU, such as CPU 30 of Figure 2, and the resulting value is stored in memory as the last light reading. The process proceeds to step 206 where a determination of the state of the electronic device is made in step 206. If the device is in a standby state, and hence not in use, then the device enters a wait state in step 208 before looping back to step 202. This loop continues while the device is in the standby state, with the last calculated average pixel intensity stored in memory as the last light reading in each iteration. The wait state can be a delay of any predetermined amount of time, such as thirty minutes for example, allowing the system to capture changing ambient light conditions. To further conserve power, the delay can be set to infinity with the routine proceeding to step 202 when the device exits the standby mode. Examples of an exit condition include keypad actuation, receipt of message, or other action that would necessitate use of the electronic device.

Otherwise, if the device is in the active state, the process proceeds via intermediate step "A" to step 210 to determine the current state of the backlight. If the backlight is not currently turned on, then it is set, or turned on, to a coarse brightness level in step 212. This coarse brightness level is set according to the pixel intensity calculated in step 204. Once the coarse brightness level of the backlight is set in step 212, the process proceeds to a wait state in step 214. If the backlight was already on in step 210, the process directly enters the wait state in step 214. The delay in step 214 can be any amount of time such as 15 seconds for example. Once the wait state ends, the camera is activated to capture another 10x10 pixel image, and the current pixel intensity is calculated in step 216. In step 218 the pixel intensity of the currently captured image is compared to that of the last captured image stored in memory. If the pixel intensity of the current and last stored images have not substantially changed, then there is no need to adjust the backlight level of the display, and the process returns to step 206 via intermediate step "B". It is noted for the present example, that the display is a transreflective display that is well known to those of skill in the art.

If the current image pixel intensity and the stored image pixel intensity are not the same, then the process proceeds to step 220 to determine the relative difference between them. If the current image pixel intensity has increased relative to the stored image pixel intensity, then the backlight intensity is decreased in step 222 to save power. On the other hand, if the current image pixel intensity has decreased relative to the stored image pixel intensity, then the backlight intensity is increased in step 224 to improve viewing of the display. The backlight intensity change executed in steps 222 and 224 can be another coarse brightness level, or can be one or more fine brightness levels between coarse brightness levels. The granularity of the coarse and fine brightness levels can be preset as desired, and the number of fine brightness levels to change in each iteration can be set to correspond with the difference between image pixel intensity levels. It is preferable to use the fine adjustment levels in steps 222 and 224 so that the user will not notice the backlight changing. After the backlight intensity is either decreased in step 222 or increased in step 224, the current image pixel intensity is stored in memory as the last light reading in step 226, and the process returns to step 206 via intermediate step "B". The process shown in Figures 4 and 5 continues until the electronic device is either turned off or activity on the unit has not been sensed for a predetermined time period.

While the method shown in Figures 4 and 5 preferably adjusts the backlight intensity by a single fine brightness level in each image capture iteration, the backlight can be adjusted by multiple fine brightness levels in each image capture iteration if the ambient light level rapidly changes between dark and light levels. Alternatively, the time between sampling images with the camera can be decreased to capture circumstances where the ambient light level rapidly changes.

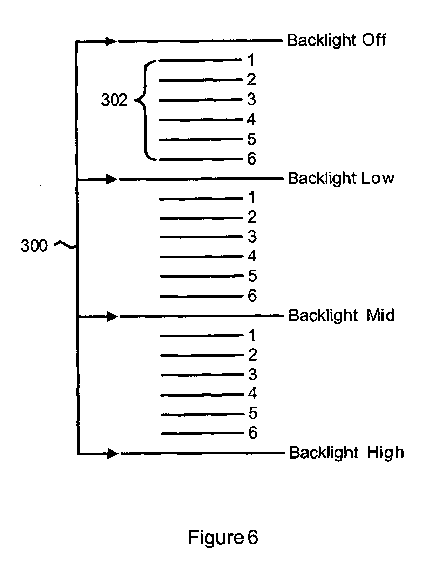

Figure 6 graphically illustrates an example scale of the backlight brightness levels that can be applied to a display under the control of the automatic backlight adjusting method embodiments of the present invention. The backlight of a display can be initially set to one of four coarse brightness levels 300. The coarse brightness levels are the off state, a low level, a mid level and a high level. Between each coarse brightness level 300 are six fine brightness levels 302 to optimize power consumption and viewer comfort. The coarse and fine brightness levels progressively increase in intensity from the off state to the fully on state.

The sequence of the intensity levels can be changed to accommodate user preferences. For example, in environments with no ambient light, the high setting of the backlight intensity can irritate the eyes of the user due to the physiological characteristics of human eyes. Therefore, the "high" and "mid" coarse brightness levels can switch positions on the scale of brightness levels shown in Figure 6, with six fine brightness levels decreasing from the "high" coarse brightness level to the "mid" coarse brightness level.

In an alternative embodiment of the present invention, the image sampling frequency can be adjusted according to the activity level of the electronic device. By increasing the image sampling frequency, the device can adjust the backlight intensity level to provide more frequent adjustment of the backlight intensity level for a user. Alternatively, the image sampling frequency can be decreased to conserve power if there is minimal or no activity level of the electronic device. Image sampling frequency adjustment can be applied to the previously described embodiment of the present invention shown in Figures 4 and 5. In particular, the delay time of wait state 214 can be increased or decreased according to the present embodiment of the invention. Those of skill in the art will understand that minimum and maximum delay time values are preset in the same way the default value is set. In one example of activity level monitoring, the frequency of button actuations can be monitored since that indicates constant user interaction. In a second example, the presence of a new message, or selection of a message to read, indicates that the user will require constant use of the display. Different criteria can be used for monitoring the activity level of specific electronic devices, and more than one criterion can be monitored at the same time. Activity level monitoring can proceed in parallel with the method of adjusting backlight intensity levels shown in Figures 4 and 5.

In yet another alternative embodiment of the present invention, the previously disclosed methods of automatic backlight adjustment can minimize sensitivity to brief ambient light changes, such as when a shadow is cast over the electronic device for example. More specifically, the automatic backlight adjustment embodiments of the present invention can inhibit backlight adjustment under specific preset conditions. For example, the difference between initial and subsequent ambient light levels must be above a predetermined percentage before the backlight is adjusted. In an example of a further restriction, if the difference is greater than the predetermined percentage, then the change must have occurred within a predetermined period of time before the backlight is adjusted. In a further example, the backlight adjustment history can be used to limit the number of adjustments to be made to the backlight within a predetermined period of time. For example, the history would not allow two or more significant backlight changes in a given time period. As should be apparent to those of skill in the art, a variety of conditions can be set to inhibit backlight adjustment in specific conditions that could cause frequent backlight adjustments, and consequently increase user discomfort.

According to another embodiment of the present invention, the display of an electronic device having a built-in camera is adjusted once after the device exits a standby mode of operation. More specifically, the camera is instructed to capture an image to sample the ambient light after the device exits the standby mode either due to receipt of an email message or button actuation for example. The backlight display intensity level can then be set to a coarse or fine level that corresponds to the average pixel intensity of the captured image, which is maintained until the device re-enters the standby mode again. The backlight intensity of the device can be changed during the active mode of operation if a significant change in ambient light occurs since the device exited from the standby mode of operation. The amount of change can be a preset amount such as 40% for example, and the camera can sample the ambient light level with any predetermined frequency. Those of skill in the art will understand that any percentage change in light level can be used as the threshold for changing the backlight intensity. Single instance adjustment of the backlight intensity level after exiting standby is useful in situations where the device undergoes a single user operation. A single user operation can include reading an email message and putting the device away, or any function that requires brief use of the device.

Thus a method and system for automatically adjusting a backlight intensity level for displays is disclosed. The system and method are suitable for implemention in electronic devices having a camera and digital backlit displays, such that the camera is used to determine an ambient light level and the backlight level is adjusted according to the determined ambient light level. In particular, when the camera is not in use for capturing images by the user, the automatic backlight adjustment system captures a first image with the camera to determine an initial ambient light level, and then captures a second image with the camera at a later time to determine a subsequent ambient light level. The subsequent and initial ambient light levels are compared to each other and the backlight intensity level is either increased or decreased a predetermined amount for optimal viewing and low power consumption. Backlight intensity determination can be performed on the basis of a single image instead of a differential between two images.

While the embodiments of the present invention are applied to backlight displays, they are applicable to any component of an electronic device that is backlit. For example, keyboard and button backlighting can be controlled with the methods taught by the embodiments of the present invention. In another embodiment of the present invention, display backlighting and keyboard backlighting can be controlled at the same time. For example, there may be sufficient ambient lighting for the keyboard and not the display, hence the ambient light information can be used to turn the display backlight on while leaving the keyboard backlighting off.

Therefore, electronic devices having built-in cameras, or dedicated digital cameras can have their backlit displays automatically controlled according to the previously discussed embodiments of the present invention.

The embodiments of the present invention can be used in electronic devices that already have built-in ambient light sensing components and functions. These devices can include cameras with a flash bulb for example. In such electronic devices, signals provided by the existing ambient light sensing components can be used by the CPU to adjust the backlight intensity level. In a further application of the ambient light sensing method according to another embodiment of the present invention, the average pixel intensity obtained by the camera can be used to determine if a flash is required for taking a picture, hence obviating the need for a dedicated light sensor for sensing ambient light conditions.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A method of automatically adjusting an intensity level of a backlight for a display of a device having a built-in camera (28) comprising:
a) capturing an image with the camera, calculating the average pixel intensity of the captured image; and
b) adjusting the intensity level of the backlight in accordance with the calculated average pixel intensity of the captured image.

2. The method of claim 1, further including the steps of
c) capturing a current image with the camera and calculating the average pixel intensity of the currently captured image,
d) comparing the average pixel intensity of the currently captured image to the average pixel intensity of the previously captured image, and
e) adjusting the intensity level of the backlight corresponding to a difference between the average pixel intensities of the currently captured image and the previously captured image.

3. The method of claim 2, wherein steps c) to e) are iteratively executed.

4. The method of claim 3, wherein each iteration is delayed by a predetermined period of time.

5. The method of claim 4, wherein the predetermined period of time is adjusted according to an activity level of the device.

6. The method of any preceding claim, wherein a camera pixel active area of the image is set to a preset size before the step of capturing.

7. The method of any preceding claim, wherein the step of adjusting includes setting a coarse backlight intensity level.

8. The method of any of claims 1 to 6, wherein the step of adjusting includes setting a fine backlight intensity level.

9. The method of claim 2, wherein each of the steps of adjusting includes one of reducing and increasing the brightness level of the backlight.

10. The method of claim 2, wherein the step e) of adjusting includes maintaining the intensity level of the backlight if the average pixel intensities of the currently captured image and the previously captured image are substantially the same.

11. The method of any preceding claim, wherein the average pixel intensity is represented by a binned pixel.

12. A device having a camera (28) and an adjustable backlight for a display, comprising:
a camera controller (34) for instructing the camera to capture an image and for receiving the captured image from the camera;
a central processor (30) for receiving the captured image, calculating the average pixel intensity of the captured image and providing a backlight control level in accordance with the calculated average pixel intensity of the captured image; and
a display controller (32) for receiving the backlight control level and for setting the backlight of the display (22) to an intensity in accordance with the backlight control level.

13. The device of claim 12, further including
a keyboard (24),
an adjustable keyboard backlight for illuminating the keyboard, and a keyboard backlight controller for receiving the backlight control level and for setting the keyboard backlight to an intensity corresponding to the backlight control level.

14. The device of claim 13, wherein the backlight intensities of the display and the keyboard are set to different levels in response to the backlight control level.

## Patentansprüche

1. Verfahren zum automatischen Einstellen eines Intensitätsniveaus eines Hintergrundlichtes für eine Anzeige einer Vorrichtung mit einer eingebauten Kamera (28), umfassend:
a) Aufnehmen eines Bildes mit der Kamera, wobei die Durchschnittspixelintensität des aufgenommenen Bildes berechnet wird, und
b) Einstellen des Intensitätsniveaus des Hintergrundlichtes entsprechend der berechneten Durchschnittspixelintensität des aufgenommenen Bildes.

2. Verfahren nach Anspruch 1, das weiterhin die Schritte umfasst:
c) Aufnehmen eines aktuellen Bildes mit der Kamera und Berechnen der Durchschnittspixelintensität des aktuell aufgenommenen Bildes,
d) Vergleichen der Durchschnittspixelintensität des aktuell aufgenommenen Bildes mit der Durchschnittspixelintensität des vorhergehend aufgenommenen Bildes, und
e) Einstellen des Intensitätsniveaus des Hintergrundlichtes entsprechend einer Differenz zwischen den Durchschnittspixelintensitäten des aktuell aufgenommenen Bildes und des vorhergehend aufgenommenen Bildes.

3. Verfahren nach Anspruch 2, wobei die Schritte c) bis e) iterativ durchgeführt werden.

4. Verfahren nach Anspruch 3, wobei jede Iteration um eine vorbestimmte Zeitdauer verzögert wird.

5. Verfahren nach Anspruch 4, wobei die vorbestimmte Zeitdauer entsprechend einem Aktivitätsniveau der Vorrichtung eingestellt wird.

6. Verfahren nach einem der vorhergehenden Ansprüche, wobei ein Kamerapixelaktivbereich des Bildes auf eine voreingestellte Größe vor dem Schritt zur Berechnung eingestellt wird.

7. Verfahren nach einem der vorhergehenden Ansprüche, wobei der Schritt zur Einstellung ein Einstellen eines groben Hintergrundlichtintensitätsniveaus umfasst.

8. Verfahren nach einem der Ansprüche 1 bis 6, wobei der Schritt zur Einstellung ein Einstellen eines feinen Hintergrundlichtintensitätsniveaus umfasst.

9. Verfahren nach Anspruch 2, wobei jeder der Schritte zur Einstellung ein Vermindern oder ein Erhöhen des Helligkeitsniveaus des Hintergrundlichtes umfasst.

10. Verfahren nach Anspruch 2, wobei der Schritt e) zur Einstellung ein Aufrechterhalten des Intensitätsniveaus des Hintergrundlichtes umfasst, wenn die Durchschnittspixelintensitäten des aktuell aufgenommenen Bildes und des vorhergehend aufgenommenen Bildes im Wesentlichen gleich sind.

11. Verfahren nach einem der vorhergehenden Ansprüche, wobei die Durchschnittspixelintensität durch ein ausgelagertes Pixel dargestellt wird.

12. Vorrichtung mit einer Kamera (28) und einem einstellbaren Hintergrundlicht für eine Anzeige, umfassend:
Eine Kamerasteuereinrichtung (34) zum Anweisen der Kamera, ein Bild aufzunehmen, und zum Empfangen des aufgenommenen Bildes von der Kamera,
einen zentralen Prozessor (30) zum Empfangen des aufgenommenen Bildes, Berechnen der Durchschnittspixelintensität des aufgenommenen Bildes und Bereitstellen eines Hintergrundlichtsteuerniveaus entsprechend der berechneten Durchschnittspixelintensität des aufgenommenen Bildes, und
eine Anzeigesteuereinrichtung (32) zum Empfangen des Hintergrundlichtsteuerniveaus und zum Einstellen des Hintergrundlichtes der Anzeige (22) auf die Intensität entsprechend dem Hintergrundlichtsteuerniveau.

13. Vorrichtung nach Anspruch 12, weiterhin umfassend
eine Tastatur (24),
ein einstellbares Tatstaturhintergrundlicht zum Beleuchten der Tastatur, und
eine Tatstaturhintergrundlichtsteuereinrichtung zum Empfangen des Hintergrundlichtsteuerniveaus und zum Einstellen des Tastaturhintergrundlichtes auf eine Intensität entsprechend dem Hintergrundlichtsteuerniveau.

14. Vorrichtung nach Anspruch 13, wobei die Hintergrundlichtintensitäten der Anzeige und der Tastatur in Antwort auf das Hintergrundlichtsteuerniveau auf unterschiedliche Niveaus eingestellt sind.

## Revendications

1. Procédé d'ajustement automatique du niveau d'intensité d'un rétro-éclairage destiné à l'écran d'affichage d'un dispositif possédant un appareil de prise de vues intégré (28), comprenant les étapes consistant à :
a) capturer une image à l'aide de l'appareil de prise de vues, calculer l'intensité moyenne des pixels de l'image capturée ; et
b) ajuster le niveau d'intensité du rétro-éclairage en fonction de l'intensité moyenne calculée des pixels de l'image capturée.

2. Procédé selon la revendication 1, comprenant en outre les étapes consistant à :
c) capturer une image courante avec l'appareil de prise de vues et calculer l'intensité moyenne des pixels de l'image capturée courante ;
d) comparer l'intensité moyenne des pixels de l'image capturée courante à l'intensité moyenne des pixels de l'image capturée précédente ; et
e) ajuster le niveau d'intensité du rétro-éclairage en fonction de la différence entre les intensités moyennes des pixels de l'image capturée courante et de l'image capturée précédente.

3. Procédé selon la revendication 2, dans lequel les étapes c) à e) sont exécutées itérativement.

4. Procédé selon la revendication 3, dans lequel chaque itération est retardée d'une période de temps prédéterminée.

5. Procédé selon la revendication 4, dans lequel la période de temps prédéterminée est ajustée en fonction du niveau d'activité du dispositif.

6. Procédé selon l'une quelconque des revendications précédentes, dans lequel une surface de pixels active de l'image est réglée sur l'appareil de prise de vues à une taille prédéterminée avant l'étape de capture.

7. Procédé selon l'une quelconque des revendications précédentes, dans lequel l'étape d'ajustement comprend l'étape consistant à régler un niveau grossier d'intensité de rétro-éclairage.

8. Procédé selon l'une quelconque des revendications 1 à 6, dans lequel l'étape d'ajustement comprend l'étape consistant à régler un niveau fin d'intensité de rétro-éclairage.

9. Procédé selon la revendication 2, dans lequel chacune des étapes d'ajustement comprend une étape de réduction et d'augmentation du niveau de luminosité du rétro-éclairage.

10. Procédé selon la revendication 2, dans lequel l'étape e) d'ajustement comprend le maintien du niveau d'intensité du rétro-éclairage si les intensités moyennes des pixels de l'image capturée courante et de l'image capturée précédente sont substantiellement identiques.

11. Procédé selon l'une quelconque des revendications précédentes, dans lequel l'intensité moyenne des pixels est représentée par un pixel obtenu par regroupement (pour « *binned pixel* »).

12. Dispositif possédant un appareil de prise de vues (28) et un rétro-éclairage ajustable pour un écran d'affichage, comprenant :
un contrôleur d'appareil de prise de vues (34) destiné à ordonner à l'appareil de prise de vues de capturer une image et à recevoir l'image capturée de l'appareil de prise de vues ;
un processeur central (30) destiné à recevoir l'image capturée, à calculer l'intensité moyenne des pixels de l'image capturée et à fournir un niveau de commande du rétro-éclairage en fonction de l'intensité moyenne calculée des pixels de l'image capturée ; et
un contrôleur d'affichage (32) destiné à recevoir le niveau de commande du rétro-éclairage et à régler le rétro-éclairage de l'écran d'affichage (22) à une intensité sur la base du niveau de commande du rétro-éclairage.

13. Dispositif selon la revendication 12, comprenant en outre:
un clavier (24),
un rétro-éclairage ajustable de clavier, destiné à éclairer le clavier, et un contrôleur de rétro-éclairage de clavier, destiné à recevoir le niveau de commande de rétro-éclairage et à régler le rétro-éclairage du clavier à une intensité correspondant au niveau de commande du rétro-éclairage.

14. Dispositif selon la revendication 13, dans lequel les intensités de rétro-éclairage de l'écran d'affichage et du clavier sont réglées à des niveaux différents en réponse au niveau de commande du rétro-éclairage.
